# NEUE EUROPÄISCHE PATENTSCHRIFT

(11) **EP 2 295 293 B2**
(45) Veröffentlichungstag und Bekanntmachung des Hinweises auf die Entscheidung über den Einspruch: **20.02.2019**
(45) Hinweis auf die Patenterteilung: 04.04.2012
(21) Anmeldenummer: 09405154.7
(22) Anmeldetag: 11.09.2009
(51) Int. Cl.: B60R 13/02, B60R 13/04

(54) **Verfahren zum Herstellen eines Bauteils mit einem flächigen Dekorelement und Bauteil mit einem flächigen Dekorelement**
Method for producing a component with a flat decorative element and component with a flat decorative element
Procédé de fabrication d'un composant doté d'un élément décoratif plat et composant doté d'un élément décoratif plat

(43) Veröffentlichungstag der Anmeldung: 16.03.2011
(73) Patentinhaber: Weidplas GmbH, 8640 Rapperswil (CH)
(72) Erfinder: Stössel, Marcel, 8722 Kaltbrunn (CH); Pfister, Fredi, 8330 Pfäffikon (CH); Benz, Josef, 8730 Uznach (CH)
(74) Vertreter: Rutz, Andrea

(56) Entgegenhaltungen:
- EP-A2- 1 344 687
- EP-A2- 1 474 173
- CA-A1- 2 366 480
- DE-C1- 19 729 780
- DE-C2- 4 421 942
- FR-A1- 2 387 708
- FR-A1- 2 906 513
- US-A1- 2009 226 676

## Beschreibung

Die Erfindung betrifft ein Verfahren zum Herstellen eines Bauteils nach dem Oberbegriff des Anspruchs 1.

Bauteile mit einem flächigen Dekorelement sind insbesondere im Automobilbau bekannt. Beispielsweise offenbart die DE 44 21 942 C2 ein Bauteil, das ein beleuchtbares Feld wie beispielsweise einen Schriftzug oder eine Symbolik aufweist und das als Einstiegsleiste oder Einstiegsschiene für ein Fahrzeug vorgesehen ist. Das flächige Dekorelement wird durch einen Wandteil gebildet, der Öffnungen aufweist, die durch Lasern, Stanzen oder dergleichen hergestellt wurden. An einer Rückseite des Wandteils ist eine Leuchtfolie angebracht. Zwischen dieser Leuchtfolie und dem Wandteil ist ein Zwischenteil aus einem durchscheinenden Kunststoff angeordnet. Dieser Zwischenteil besitzt Erhebungen, welche in die genannten Öffnungen hineinragen. Dieses Zwischenteil wird beispielsweise durch Kleben oder Schrauben am Wandteil befestigt.

Die DE 20 2004 008 681 U1 offenbart ein Bauteil, das für eine Bodenwannenkante eines Automobils vorgeseben ist. Hier ist ebenfalls ein Zwischenteil vorgesehen, das Erhebungen aufweist, welche in korrespondietende Öffnungen des flächigen Dekorelements eingreifen. Ebenfalls vorgesehen ist eine Lichtquelle an der Rückseite des Dekorelements. Ein Dekorationskörper mit beleuchtbaren Dekorelementen ist auch aus der EP 2 028 048 A1 bekannt geworden.

Die US 6,419,306 A offenbart eine beleuchtbare Platte für Kraftfahrzeuge, die ein flächiges Dekorelement mit Durchbrüchen, eine mehrschichtige Folie und einen Lichtleiter aufweist. Um eine ebene Sichtseite zu erhalten, werden die Durchbrüche mit transparente Kunststoff ausgegossen.

Soll ein Bauteil mit einem Schriftzug hergestellt werden, der beispielsweise die Buchstaben A und B aufweist, so enthalten diese Buchstaben jeweils wenigstens einen inselformigen Teil, der entsprechend positioniert werden muss. Dies ist beispielsweise durch Stege möglich. Solche Stege sind aber oft beispielsweise aus ästhetischen Gründen nicht gewünscht. Bekannt ist die Positionierung dieser inselförmigen Teile im Spritzgusswerkzeug mittels Vakuum. Dies ist jedoch vergleichsweise aufwendig. Zudem müssen die inselförmigen Teile in Vertiefungen des Spritzgusswerkzeugs positioniert werden, was mit einem Greifer oder von Hand erfolgen kann. Es hat sich auch gezeigt, dass die genannten inselförmigen Teile am fertig hergestellten Bauteil nicht immer exakt bündig zur Oberfläche des flächigen Dekorelements sind.

Der Erfindung liegt die Aufgabe zugrunde, ein Verfahren der genannten Art zu schaffen, dass eine einfachere Herstellung eines solchen Bauteils ermöglicht.

Die Aufgabe ist bei einem gattungsgemässen Verfahren gemäss Anspruch 1 gelöst.

Beim erfindungsgemässen Verfahren wird der wenigstens eine Durchbruch wenigstens teilweise und vorzugsweise vollständig durch die Folie ausgefüllt. Ist ein inselfürmiger Teil vorbanden, so wird dieser vor dem Aufbringen der wenigstens einen Schicht durch die Folie fixiert. Ein weiterer Vorteil besteht darin, dass das wenigstens eine inselformige Teil durch den Eingriff der Folie in den wenigstens einen Durchbruchs besonders sicher positioniert wird und dass äussere Einflüsse wie beispielsweise Temperaturänderungen und Feuchtigkeit die genaue Positionierung des inselförmigen Teils nicht beeinflussen können. Dies kann durch einen Eingriff der wenigstens einen Schicht in die Folie zusätzlich verbessert werden. Vorzugsweise ist die Folie zur Sichtseite bündig. Da das Dekorelement nicht direkt hinterspritzt wird, sondern die Folie angespritzt wird, kann der Anspritzpunkt frei gewählt werden. Dieser könnte sich auch im Bereich eines inselförmigen Teils befinden, da dieser Teil durch die Folie geschützt ist und insbesondere Verschiebungen des Teils durch den Anspritzdruck vermieden werden können.

Es hat sich gezeigt, dass das erfindungsgemässe Verfahren den besonderen Vorteil besitzt, dass die in den wenigstens einen Durchbruch eingedrungene Folie scharfe Kanten des flächenförmigen Dekorelements im Bereich des wenigstens einen Durchbruchs wegnimmt bzw. unwirksam macht. Zwischenräume im Bereich des wenigstens einen Durchbruchs können vermieden werden, so dass eine Verschmutzung auch bei längerem Gebrauch vermieden werden kann. Das erfindungsgemässe Verfahren eignet sich deshalb auch zum Herstellen eines Bauteils, bei dem das flächige Dekorelement keine inselförmigen Teile aufweist.

Insbesondere eignet sich das Verfahren zum Herstellen eines Bauteils, mit dem ein beleuchtbares Feld im Innenbereich oder Aussenbereich eines Kraftfahrzeuges herstellbar ist. Beispielsweise aber nicht ausschliesslich eignet sich ein solches Bauteil zum Herstellen einer Einstiegsleiste, einer Zierleiste, eines Bedienelements, beispielsweise eine Taste.

Nach einer Weiterbildung der Erfindung ist vorgesehen, dass die Folie auf die Rückseite des flächigen Dekorelements aufgeklebt wird. Das Aufkleben der Folie kann besonders einfach und sicher mittels einer Rolle erfolgen. Auf der Folie und/oder dem Dekorelement kann ein Haftvermittler aufgebracht werden.

Die Folie ist insbesondere eine Kunststofffolie. Diese kann farblos bzw. weiss oder auch eingefärbt sein. Durch eingefärbte Kunststofffolien können entsprechend bunte beleuchtbare Felder hergestellt werden. Die Folie kann ein- oder mehrschichtig sein. Die wenigstens eine Folie ist wenigstens bereichsweise durchscheinend. Denkbar ist auch eine Ausführung mit mehreren Folien, die gleich oder unterschiedlich sein können.

Die wenigstens eine Schicht wird gemäss einer Weiterbildung der Erfindung durch Spritzgiessen oder Extrudieren hergestellt. In allen diesen Fällen wird auf die Folie ein Druck ausgeübt, durch den ein Bereich der Folie in den wenigstens einen Durchbruch hinein gepresst wird und schliesslich wenigstens teilweise in diesen eingreift. Die wenigstens eine Schicht greift vorzugsweise wiederum in die Folie ein. Schliesslich wird ein sehr stabiler Verbund von wenigstens drei Schichten erhalten. Bevorzugt wird die Herstellung durch Spritzgiessen, da hier im Wesentlichen keine Einschränkungen bezüglich der Form des Bauteils bestehen, wohingegen durch Extrusion hergestellte Bauteile im Wesentlichen bandförmig sein müssen. Möglich ist auch ein Spritzprägen was eine Form des Spritzgiessens ist.

Das flächige Dekorelement ist gemäss einer Weiterbildung der Erfindung aus einem Metallblech hergestellt. Grundsätzlich könnte das flächige Dekorelement aber beispielsweise auch aus Kunststoff hergestellt sein. Das Kunststoff-Dekorelement kann mindestens teilweise durchscheinend sein. Das Dekorelement kann eine sehr dünne und hochflexible Folie sein, da das Dekorelement von der beispielsweise angespritzten Kunststoffschicht getragen wird. Die Kunststoffschicht kann mit Befestigungsteilen versehen sein, mit denen das Bauteil befestigt werden kann.

Nach einer Weiterbildung der Erfindung ist vorgesehen, dass das wenigstens eine inselförmige Teil vor dem Aufbringen der Folie in einer Aufnahme mittels Vakuum fixiert wird. Nach dem Aufbringen der Folie kann das Vakuum aufgehoben und das flächige Dekorelement mit der Folie beispielsweise in den Formhohlraum eines Spritzgusswerkzeuges eingelegt werden. Im Spritzgusswerkzeug oder auch im Extruder ist dann eine Fixierung des inselförmigen Teils nicht mehr zwingend.

Das nach dem Verfahren hergestellte erfindungsgemässe Bauteil besitzt wenigstens drei Schichten. Die erste Schicht wird durch das flächige Dekorelement und die zweite Schicht durch die rückseitig auf dieses Dekorelement aufgebrachte Folie gebildet. Die Folie greift im Bereich der Durchbrüche in diese ein und füllt diese Durchbrüche somit wenigstens teilweise aus. An der Sichtseite des Bauteils ist die Folie im Bereich der Durchbrüche vorzugsweise bündig mit dieser Sichtseite. Diese Sichtseite bildet mit den eventuell vorhandenen inselförmigen Teilen eine ebene oder auch unebene, beispielsweise gewölbte Fläche, Ausserhalb des wenigstens einen Durchbruchs sind selbstverständlich auch Erhebungen oder Vertiefungen denkbar. Ein solches Bauteil kann eine vergleichsweise geringe Dicke von wenigen Millimetern aufweisen. Die angespritzte Schicht ist insbesondere eine tragende und mit Befestigungsteilen versehene Schicht, während das Dekorelement sehr dünn und flexibel sein kann. Insbesondere kann gewährleistet werden, dass inselförmige Teile bezüglich der Sichtseite bündig sind.

An der Rückseite des Bauteils kann beispielsweise ein Lichtleiter vorhanden sein, an dem eine Lichtquelle angeordnet ist. Die Lichtquelle kann durch eine oder mehrere LED gebildet sein. Möglich ist auch eine Beleuchtung lediglich mit LED's oder einer Elektrolumineszenzfolie. Das erfindungsgemässe Bauteil ist insbesondere für den Automobilbau vorgesehen, es sind jedoch auch Anwendungen auf anderen Gebieten denkbar. Beispielsweise könnte mit einem solchen Bauteil ein beleuchtetes Feld bei einem Möbel oder einem Haushaltgerät, beispielsweise Kühlschränke, Dampfgarer, Waschmaschinen, Backöfen, Kochherd oder Geschirrspülmaschinen, hergestellt werden.

Weitere vorteilhafte Merkmale ergeben sich aus den abhängigen Patentansprüchen, der nachfolgenden Beschreibung sowie den Zeichnungen.

Ausführungsbeispiele der Erfindung werden nachfolgend anhand der Zeichnung näher erläutert. Es zeigen:
- Fig. 1: schematisch eine räumliche Ansicht eines erfindungsgemässen Bauteils,
- Fig. 2: ein Schnitt durch einen Abschnitt des flächigen Dekorelements,
- Fig. 3: ein Schnitt gemäss Fig. 2, wobei auf das flächige Dekorelement rückseitig eine Folie aufgebracht ist,
- Fig. 4: ein Schnitt durch das erfindungsgemässe Bauteil entlang der Linie IV - IV der Fig. 5,
- Fig. 5: eine Ansicht eines Teilbereichs der Sichtseite eines erfindungsgemässen Bauteils und
- Fig. 6 bis 8: Teilschnitte durch Varianten des erfindungsgemässen Bauteils.

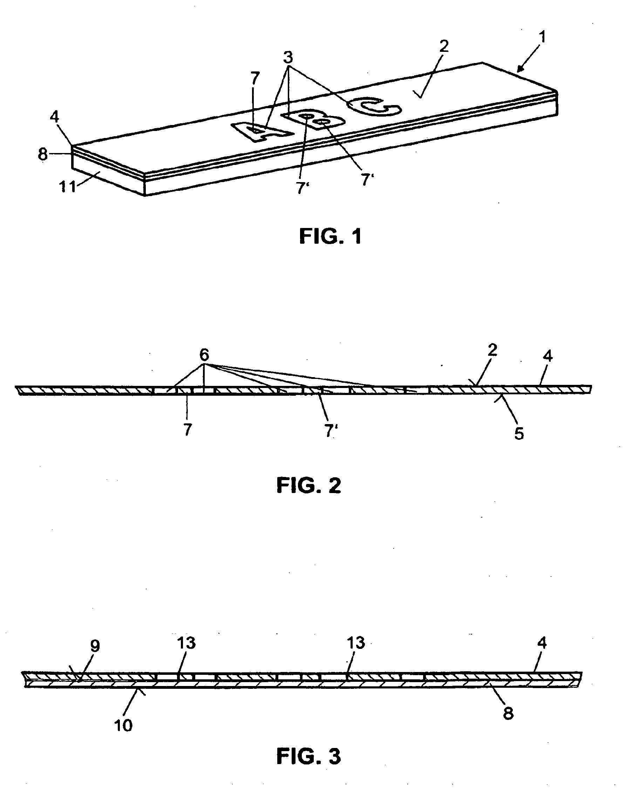

Die Fig. 1 zeigt ein Bauteil 1, das eine ebene oder unebene Sichtseite 2 aufweist, auf welcher ein Feld 3 sichtbar ist, das die Buchstaben A, B und C darstellt. Diese Buchstaben sind hier lediglich ein Beispiel für ein solches Feld, das an sich beliebig ausgebildet sein kann. Das Feld 3 ist beleuchtbar. Die hierzu erforderlichen Beleuchtungsmittel sind hier nicht dargestellt, dem Fachmann sind aber solche an sich bekannt.

Das Feld 3 wird durch die in Fig. 2 gezeigten Durchbrüche 6 in einem flächigen Dekorelement 4 gebildet. Diese Durchbrüche 6 werden beispielsweise durch Lasern oder Stanzen hergestellt. Das flächige Dekorelement 4 ist beispielsweise ein Metallblech, beispielsweise aus Aluminium. Grundsätzlich könnte das flächige Dekorelement 4 aber auch aus anderem Material, beispielsweise aus Kunststoff hergestellt sein. Vorzugsweise besitzt das flächige Dekorelement 4 eine vergleichsweise geringe Dicke, von beispielsweise einem Millimeter oder weniger als einem Millimeter, vorzugsweise weniger als 0.5 Millimeter. Das flächige Dekorelement 4 kann mit einer Schutzfolie abgedeckt sein, die nach dem Einbau in der Regel entfernt wird.

Das flächige Dekorelement 4 besitzt eine Rückseite 5, auf welche eine Folie 8 flächig aufgebracht ist. Diese Folie 8 bildet eine vorzugsweise durchscheinende bzw. wenigstens teilweise transparente Schicht aus Kunststoff. Die Dicke der Folie 8 bzw. Schicht beträgt vorzugsweise ein Millimeter oder weniger als ein Millimeter und vorzugsweise mehr als 0.05 Millimeter. Vorzugsweise beträgt die Dicke 0.1 bis 0.3 Millimeter. Die Folie 8 wird beispielsweise aus ABS, Polykarbonat oder PMMA hergestellt.

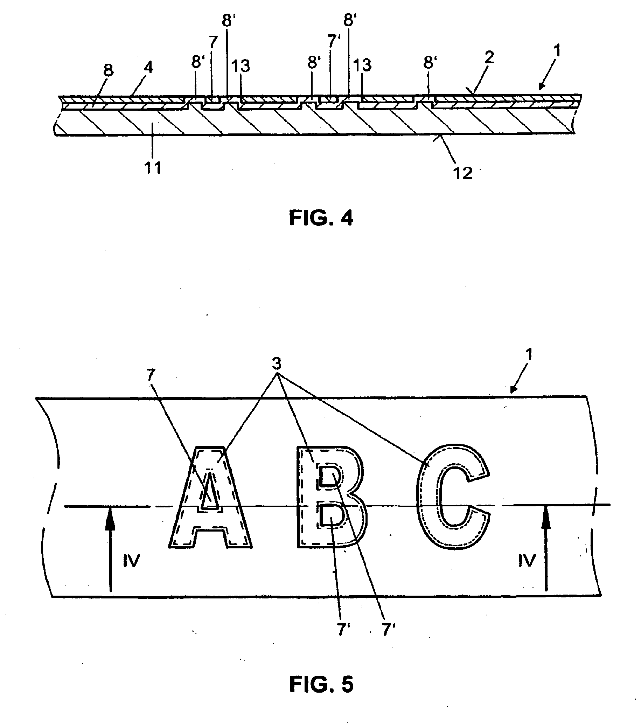

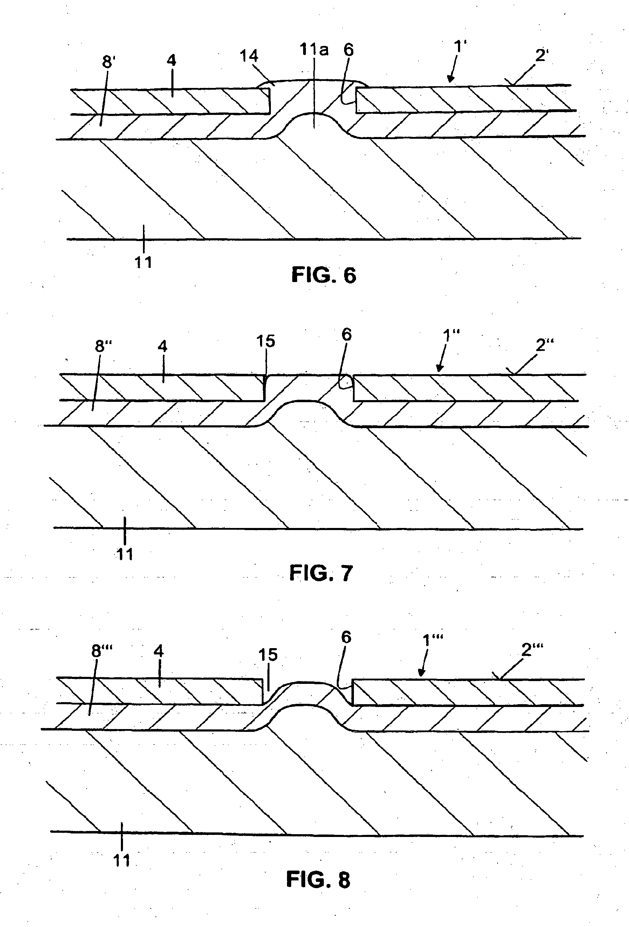

Das Bauteil 1 besitzt eine weitere Schicht 11, die durch einen thermoplastischen Kunststoff gebildet wird, welcher an einer Rückseite 10 der Folie 8 angespritzt ist. Im Bereich der Durchbrüche 6 ist die Folie 8 durch die Schicht 11 in diese Durchbrüche 6 hinein gepresst. Die Folie 8 besitzt somit gemäss Fig. 4 Bereiche 8', die an der Sichtseite 2 sichtbar sind. Diese Bereiche 8' sind bezüglich der Sichtseite 2 bündig. Die Bereiche 8' füllen die Durchbrüche 6 vollständig aus. Insbesondere werden durch die Bereiche 8' Kanten 13 (Fig. 3 und 4) in den Durchbrüchen 6 durch die Bereiche 8' abgedeckt. Die Schärfe dieser Kanten 13 ist damit durch die Bereiche 8' eliminiert und zudem bilden sich an diesen Kanten 13 keine Lücken, durch welche Teile oder auch Flüssigkeit eindringen könnten. Die Folie 8 kann an der Sichtseite 2 jedoch auch vorstehen. Die Folie 8 kann beispielsweise an der Sichtseite vorstehende Noppen 14 bilden, wie die Fig. 6 zeigt. Das in Fig. 6 gezeigte Bauteil 1', weist eine Folie 8' auf, die den Durchbruch 6 vollständig ausfüllt und zudem auf einer Sichtseite 2' vorsteht und den Noppen 14 bildet. Die Schicht 11 greift wie ersichtlich im Bereich des Durchbruchs 6 mit einem ebenfalls noppenförmigen Bereich 11a in die Folie 8' ein.

Die Fig. 7 zeigt ein Bauteil 1", bei dem eine Folie 8" bezüglich einer Sichtseite 2" bündig ist, den Durchbruch 6 aber nicht vollständig ausfüllt, so dass an der Sichtseite 2" zwischen der Folie 8" und dem Dekorelement 4 ein Spalt 15 vorhanden ist. Bei dem in Fig. 8 gezeigten Bauteil 1"' greift eine Folie 8"' in den Durchbruch 6 ein, ist jedoch nicht bündig zu einer Sichtseite 2'" und bildet ebenfalls einen Spalt 15.

Die Erfindung ermöglicht somit die Herstellung von Bauteilen 1 bis 1"' mit wesentlich unterschiedlichen Sichtseiten 2 bis 2'".

Die Schicht 11 als auch die Folie 8 sind durchscheinend bzw. transparent, so dass das Feld 3 von einer Rückseite 12 her beleuchtbar ist. Die Schicht 11 kann hier nicht gezeigte Befestigungsmittel aufweisen, mit denen das Bauteil beispielsweise an eine Carosserie eines Kraftfahrzeugs befestigt werden kann.

Im Feld 3 sind gemäss den Figuren 1 und 5 inselförmige Teile 7 bzw. 7' vorhanden. Diese Teile 7 bzw. 7' sind gemäss Fig. 4 in der Folie 8 eingebettet und werden damit durch diese fixiert. Diese inselförmigen Teile 7 sind bezüglich der Sichtseite 2 vorzugsweise bündig.

Nachfolgend wird das bevorzugte Verfahren zur Herstellung des Bauteils 1 näher erläutert.

In einem ersten Schritt wird das flächige Dekorelement 4 beispielsweise aus einem bandförmigen Material hergestellt. Die Durchbrüche 6 werden beispielsweise durch Lasern oder Stanzen hergestellt. Das flächige Dekorelement 4 ist hierbei in einer hier nicht gezeigten Aufnahme fixiert. Die Fixierung erfolgt beispielsweise durch ein Vakuum, das an der Sichtseite 2 angelegt wird. Die beim Herstellen der Durchbrüche 6 entstehenden inselförmigen Teile 7 werden durch das Vakuum ebenfalls fixiert.

In einem zweiten Schritt wird auf die Rückseite 5 die Folie 8 aufgebracht. Die Folie 8 wird vorzugsweise auf die Rückseite 5 aufgeklebt. Die Folie 8 und/oder auch das flächige Dekorelement 4 sind hierbei mit einer hier nicht gezeigten Klebeschicht oder Klebteilen versehen. Das Aufkleben bzw. Aufbringen der Folie 8 erfolgt hier beispielsweise mit einer hier nicht gezeigten Rolle. Ist die Folie 8 auf das Dekorelement 4 aufgebracht, so wird das Dekorelement 4 der Aufnahme entnommen. Inselförmige Teile 7 und 7' werden nun durch die Folie 8 fixiert.

Das mit der Folie 8 versehene flächige Dekorelement 4 wird nun in einen Formhohlraum eines hier nicht gezeigten Spritzwerkzeugs eingelegt. Das Spritzgusswerkzeug kann wie üblich ausgebildet sein. Nach dem Schliessen des Spritzgusswerkzeugs wird die Schicht 11 durch Hinterspritzen des eingelegten Teils hergestellt. Durch den Spritzdruck wird die Folie 8 im Bereich der Durchbrüche 6 deformiert und dringt in die Durchbrüche 6 ein. Entsprechend dringt die Schicht 11 im Bereich der Durchbrüche 6 in die Folie 8 ein, wie die Fig. 4 erkennen lässt. Das Bauteil 1 kann nun entformt werden.

Die Schicht 11 kann alternativ durch Extrudieren hergestellt werden. Das flächige Dekorelement 4 wird hierbei mit der aufgebrachten Folie 8 durch eine Extrusionsdüse gezogen und hierbei die Schicht 11 kontinuierlich aufgebracht. Das flächige Dekorelement 4 und die Folie 8 bilden hierbei ein Band. Möglich ist zudem eine Herstellung der Schicht 11 durch Spritzprägen, das ebenfalls ein Spritzgiessverfahren ist.

### BEZUGSZEICHENLISTE

- 1: Bauteil
- 2: Sichtseite
- 3: Feld
- 4: flächiges Dekorelement
- 5: Rückseite
- 6: Durchbrüche
- 7: inselformiges Teil
- 8: Folie
- 9: Vorseite
- 10: Rückseite
- 11: Schicht
- 12: Rückseite
- 13: Kante
- 14: Noppen
- 15: Spalt

## Patentansprüche

1. Verfahren zum Herstellen eines Bauteils (1), das ein flächiges Dekorelement (4) mit wenigstens einem Durchbruch (6), einer Sichtseite (2), einer Rückseite (5) und wenigstens eine an der Rückseite (5) angebrachten Schicht (11) aufweist, und das Beleuchtungsmittel zum Beleuchten des wenigstens einen Durchbruchs (6) aufweist, **dadurch gekennzeichnet, dass** vor dem Aufbringen der wenigstens einen Schicht (11) wenigstens im Bereich des wenigstens einen Durchbruchs (6) auf die Rückseite (5) des flächigen Dekorelements (4) wenigstens eine Folie (8) aufgebracht wird, die wenigstens bereichsweise durchscheinend ist, und die beim Aufbringen der wenigstens einen Schicht (11) durch diese im Bereich des wenigstens einen Durchbruchs (6) in diesen hinein gepresst wird, so dass die Folie (8) wenigstens teilweise in den wenigstens einen Durchbruch (6) eingreift.

2. Bauteil, das ein flächiges Dekorelement (4) mit wenigstens einem Durchbruch (6), einer Sichtseite (2), einer Rückseite (5) sowie wenigstens eine an der Rückseite (5) angeordnete Schicht (11) aufweist, und das Beleuchtungsmittel zum Beleuchten des wenigstens einen Durchbruchs (6) aufweist, **dadurch gekennzeichnet, dass** wenigstens im Bereich des wenigstens einen Durchbruchs (6) auf der Rückseite des flächigen Dekorelements (4) wenigstens eine Folie (8) aufgebracht ist, die wenigstens bereichsweise durchscheinend ist, und die wenigstens teilweise in den wenigstens einen Durchbruch (6) eingreift.

3. Verfahren nach Anspruch 1, **dadurch gekennzeichnet, dass** innerhalb wenigstens eines Durchbruchs (6) wenigstens ein inselförmiges Teil (7) des flächigen Dekorelements (4) vorhanden ist.

4. Verfahren nach Anspruch 1 oder 3, **dadurch gekennzeichnet, dass** die Folie (8) auf der Rückseite (5) des flächigen Dekorelements (4) befestigt und insbesondere aufgeklebt wird.

5. Verfahren nach Anspruch 1 oder nach einem der Ansprüche 3 oder 4, **dadurch gekennzeichnet, dass** die wenigstens eine Schicht (11) durch Hinterspritzen des flächigen Dekorelements (4) im Formhohlraum eines Spritzgusswerkzeugs oder durch Extrusion hergestellt wird.

6. Verfahren nach Anspruch 1 oder nach einem der Ansprüche 3 bis 5, **dadurch gekennzeichnet, dass** die wenigstens eine Schicht (11) eine tragende Schicht (11) bildet, die wesentlich dicker ist als das Dekorelement (4).

7. Verfahren nach Anspruch 6, **dadurch gekennzeichnet, dass** die Dicke des Dekorelements (4) ein Millimeter oder kleiner als ein Millimeter und die Dicke der tragenden Schicht (11) grösser als ein Millimeter ist.

8. Bauteil nach Anspruch 2, **dadurch gekennzeichnet, dass** die Folie (8) im Bereich des wenigstens einen Durchbruchs (6) mit der Sichtseite (2) des flächigen Dekorelements (4) bündig ist.

9. Bauteil nach Anspruch 2 oder nach Anspruch 8, **dadurch gekennzeichnet, dass** der wenigstens eine Durchbruch (6) durch die wenigstens eine Folie (8) im Wesentlichen vollständig ausgefüllt ist.

10. Bauteil nach Anspruch 2 oder nach einem der Ansprüche 8 oder 9, **dadurch gekennzeichnet, dass** die Folie (8) eine Dicke im Bereich von einem Millimeter bis 0.05 Millimeter vorzugsweise 0.1 - 0.3 Millimeter aufweist.

11. Bauteil nach Anspruch 2 oder nach einem der Ansprüche 8 bis 10, **dadurch gekennzeichnet, dass** die wenigstens eine Schicht (11) durch Spritzgiessen oder Extrusion hergestellt ist.

12. Bauteil nach Anspruch 2 oder nach einem der Ansprüche 8 bis 11, **dadurch gekennzeichnet, dass** es für den Automobilbau insbesondere zum Herstellen einer Einstiegsleiste vorgesehen ist.

13. Bauteil nach Anspruch 2 oder nach einem der Ansprüche 8 oder 9, **dadurch gekennzeichnet, dass** die wenigstens eine Schicht (11) wiederum im Bereich des wenigstens einen Durchbruchs (6) in die wenigstens eine Folie (8) eingreift und mit dieser verbunden ist.

## Claims

1. Method for producing a component (1), which has a two-dimensionally extending decorative element (4) with at least one aperture (6), a visible side (2), a rear side (5) and at least one layer (11) attached to the rear side (5), and which has illuminating means for illuminating the at least one aperture (6), **characterized in that**, before the at least one layer (11) is applied, at least one foil (8) which is translucent at least in a certain region or regions is applied to the rear side (5) of the two-dimensionally extending decorative element (4), at least in the region of the at least one aperture (6), and during the application of the at least one layer (11) is pressed by said layer in the region of the at least one aperture (6) into said aperture, so that the foil (8) at least partially engages in the at least one aperture (6).

2. Component which has a two-dimensionally extending decorative element (4) with at least one aperture (6), a visible side (2), a rear side (5) and at least one layer (11) arranged on the rear side (5) and which has illuminating means for illuminating the at least one aperture (6), **characterized in that** at least one foil (8) which is translucent at least in a certain region or regions has been applied to the rear side of the two-dimensionally extending decorative element (4), at least in the region of the at least one aperture (6), and at least partially engages in the at least one aperture (6).

3. Method according to Claim 1, **characterized in that** within at least one aperture (6) there is at least one insular part (7) of the two-dimensionally extending decorative element (4).

4. Method according to Claim 1 or 3, **characterized in that** the foil (8) is attached on the rear side (5) of the two-dimensionally extending decorative element (4), and in particular is adhesively attached.

5. Method according to Claim 1 or to one of Claims 3 or 4, **characterized in that** the at least one layer (11) is produced by injecting it behind the two-dimensionally extending decorative element (4) in the mould cavity of an injection-moulding tool or by extrusion.

6. Method according to Claim 1 or to one of Claims 3 to 5, **characterized in that** the at least one layer (11) forms a supporting layer (11), which is significantly thicker than the decorative element (4) .

7. Method according to Claim 6, **characterized in that** the thickness of the decorative element (4) is one millimetre or less than one millimetre and the thickness of the supporting layer (11) is greater than one millimetre.

8. Component according to Claim 2, **characterized in that** the foil (8) is flush with the visible side (2) of the two-dimensionally extending decorative element (4) in the region of the at least one aperture (6).

9. Component according to Claim 2 or to Claim 8, **characterized in that** the at least one aperture (6) is filled substantially completely by the at least one foil (8).

10. Component according to Claim 2 or to one of Claims 8 or 9, **characterized in that** the foil (8) has a thickness in the range from one millimetre to 0.05 millimetre, preferably 0.1-0.3 millimetre.

11. Component according to Claim 2 or to one of Claims 8 to 10, **characterized in that** the at least one layer (11) is produced by injection moulding or extrusion.

12. Component according to Claim 2 or to one of Claims 8 to 11, **characterized in that** it is intended for automobile construction, in particular for producing a door sill.

13. Component according to Claim 2 or to one of Claims 8 or 9, **characterized in that** the at least one layer (11) in turns engages in the at least one foil (8), and is bonded with it, in the region of the at least one aperture (6).

## Revendications

1. Procédé de fabrication d'un élément de construction (1) qui présente un élément décoratif s'étendant en deux dimensions (4) doté d'au moins une perforation (6), d'un côté visible (2), d'un côté arrière (5) et d'au moins une couche (11) placée sur le côté arrière (5) et qui présente des moyens d'éclairage qui éclairent la ou les perforations (6),
**caractérisé en ce que**
avant l'application de la ou des couches (11), au moins au niveau de la ou des perforations (6), au moins une feuille (8) à partir de laquelle au moins certaines parties sont translucides et qui, lors de l'application de la ou des couches (11) est repoussé dans la ou les perforations (6) au niveau de ces dernières, est appliqué au moins au niveau de la ou des perforations (6) sur le côté arrière (5) de l'élément décoratif s'étendant en deux dimensions (4) de telle sorte que la feuille (8) s'engage au moins en partie dans la ou les perforations (6).

2. Élément de construction qui présente un élément décoratif s'étendant en deux dimensions (4) doté d'au moins une perforation (6), d'un côté visible (2), d'un côté arrière (5) ainsi que d'au moins une couche (11) disposée sur le côté arrière (5) et qui présente des moyens d'éclairage qui éclairent la ou les perforations (6),
**caractérisé en ce que**
au moins une feuille (8) à partir de laquelle au moins certaines parties sont translucides et qui s'engage au moins en partie dans la ou les perforations (6) est appliquée au niveau de la ou des perforations (6) sur le côté arrière de l'élément décoratif s'étendant en deux dimensions (4).

3. Procédé selon la revendication 1, **caractérisé en ce qu'**au moins une partie (7) en forme d'îlot de l'élément décoratif s'étendant en deux dimensions (4) est prévue à l'intérieur de la ou des perforations (6).

4. Procédé selon la revendication 1 ou 3, **caractérisé en ce que** la feuille (8) est fixée sur le côté arrière (5) de l'élément décoratif s'étendant en deux dimensions (4) et en particulier y est collée.

5. Procédé selon la revendication 1 ou l'une des revendications 3 ou 4, **caractérisé en ce que** la ou les couches (11) sont réalisées par rétroinjection de l'élément décoratif s'étendant en deux dimensions (4) dans la cavité de moulage d'un outil de moulage par injection, ou par extrusion.

6. Procédé selon la revendication 1 ou l'une des revendications 3 à 5, **caractérisé en ce que** la ou les couches (11) forment une couche portante (11) qui est essentiellement plus épaisse que l'élément décoratif (4) .

7. Procédé selon la revendication 6, **caractérisé en ce que** l'épaisseur de l'élément décoratif (4) est d'un millimètre ou est inférieure à un millimètre et **en ce que** l'épaisseur de la couche portante (11) est supérieure à un millimètre.

8. Élément de construction selon la revendication 2, **caractérisé en ce que** la feuille (8) est reliée à chant au côté visible (2) de l'élément décoratif s'étendant en deux dimensions (4) au niveau de la ou des perforations (6).

9. Élément de construction selon la revendication 2 ou la revendication 8, **caractérisé en ce que** la ou les perforations (6) sont remplies essentiellement complètement par la ou les feuilles (8).

10. Élément de construction selon la revendication 2 ou l'une des revendications 8 ou 9, **caractérisé en ce que** la feuille (8) présente une épaisseur de l'ordre d'un millimètre à 0,05 millimètre et de préférence de 0,1 à 0,3 millimètre.

11. Élément de construction selon la revendication 2 ou l'une des revendications 8 à 10, **caractérisé en ce que** la ou les couches (11) sont réalisées par moulage par injection ou par extrusion.

12. Élément de construction selon la revendication 2 ou l'une des revendications 8 à 11, **caractérisé en ce qu'**il est prévu pour la construction d'automobiles, en particulier pour fabriquer un seuil de porte.

13. Élément de construction selon la revendication 2 ou l'une des revendications 8 ou 9, **caractérisé en ce que** la ou les couches (11) engagent la ou les feuilles (8) au niveau de la ou des perforations (6) et sont reliées à ce ou ces feuilles.
